# EUROPEAN PATENT SPECIFICATION

(11) **EP 1 759 560 B1**
(45) Date of publication and mention of the grant of the patent: **08.10.2008**
(21) Application number: 05747342.3
(22) Date of filing: 02.06.2005
(51) Int. Cl.: H04R 1/10, H04R 5/033

(54) **WIRELESS STEREO BADGE WITH MICROPHONE AND TWO RETRACTABLE EARPIECES**
DRAHTLOSE STEREO-MARKE MIT MIKROFON UND ZWEI ZURÜCKZIEHBAREN OHRELEMENTEN
BADGE RADIO STEREO A MICRO ET DEUX ECOUTEURS RENTRANTS

(30) Priority: 23.06.2004 GB 0414015
(43) Date of publication of application: 07.03.2007
(73) Proprietor: Callan, Neil, Mortimer, Berkshire Reading Berkshire RG7 3AD (GB)
(72) Inventor: Callan, Neil, Mortimer, Berkshire Reading Berkshire RG7 3AD (GB)
(86) International application number: PCT/GB2005/002214
(87) International publication number: WO 2006/000744

(56) References cited:
- US-A1- 2003 134 603
- US-B1- 6 484 424
- PATENT ABSTRACTS OF JAPAN vol. 1997, no. 08, 29 August 1997 (1997-08-29) -& JP 09 093683 A (YAMAGUCHI NOBORU; MOTOI KATSUO), 4 April 1997 (1997-04-04)

## Description

### Background to Invention

The invention came to mind after spending time using a conventional mono Bluetooth earpiece with my mobile phone and then having to swap to a hard wired pair of earphones when I wanted to listen to an MP3 player or portable CD player.

### Problems solved by embodiments of this invention

- It enables wireless hands free operation of a mobile phone with stereo sound.
- It offers the user a comfortable alternative to existing Bluetooth (R.T.M) earpieces that sit on the ear.
- The product can be used with existing wireless stereo adaptors including Bluetooth (R.T.M) in place of more bulky wireless headphones so that only one headset needs to be carried for use with multiple stereo products.
- Due to its retractable earpieces, it reduces the possibility of tangled earpiece cables
- Its' physical location (e.g. pinned or clipped to the lapel or T-Shirt) enables it to be used in a more spontaneous manner than hard wired stereo headsets that are not already being worn. This may become more important as 3G/UMTS services such as Video Telephony are made available to a larger market.
- It enables the user to have a greater degree of movement with less fear (than may exist with a conventional Bluetooth (R.T.M) earpiece) of dropping the earpiece as a result of it falling off the ear.
- It enables the user to see the volume up/down and answer buttons when the product is being worn, reducing the occasions when calls are dropped by accident as a result of pressing the wrong button on an earpiece that is mounted on the ear.

### What the Invention Does

Existing Bluetooth (R.T.M) headsets offer wireless connectivity for mobile phones with mono sound (single ear operation). New mobile phones will be available that support stereo sound plus video playback of film and music tracks. In order to watch the screen and listen to the track or clip, the phone needs to be held away from the ear therefore a pair of earphones is necessary. The use of conventional hard-wired headsets with mobile phones will therefore become more commonplace. This is also true because video telephony (that also requires the phone to held away from the ear) is due to be introduced in many markets with the launch of 3G/UMTS services by many mobile operators. As more people use hard wired stereo headsets/earpieces, more people will become frustrated due to tangled wires or having to dig around in their pocket or handbag for the headset when a video call is received.

This Wireless Stereo Badge helps to eliminate many of the problems that exist when using a hard-wired stereo headset. It also offers the user the benefit of stereo sound (unlike existing Bluetooth (R.T.M) earpieces) in a compact clip on badge with retractable earphones. From my own experience, wearing a conventional Bluetooth (R.T.M) ear mounted headset also results in discomfort of the ear that will be significantly reduced when using this stereo Bluetooth badge with small in-ear earpieces.

### Features

This Wireless Stereo Badge has the following features:
- Its design enables it to be fastened to a users lapel, shirt or blouse.
- It has a pair of retractable earpieces that fit into recesses on the rear of the badge.
- It may support both mono and stereo audio.
- It can be used with mobile phones or with other Bluetooth (R.T.M) devices where audio listening and/ or recording is required (e.g. Personal Computers, CD/MP3 players).
- It has built in jack plug connectors for the charger & alternative headset.

### Detailed Description

The attached drawing shows five images, the first three show a Front, Rear & Side view of Wireless Stereo Badge. The forth image shows a rear view, this time with the earphones extracted from the recess on the badge and extended out in an opposite direction from the retractable/locking cable reel located in the centre. When in use these earpieces are extended to a suitable length to enable comfortable insertion into each ear while the badge remains fastened to the user's lapel. The fifth image is an example of a PCB that can be used with the housing design.

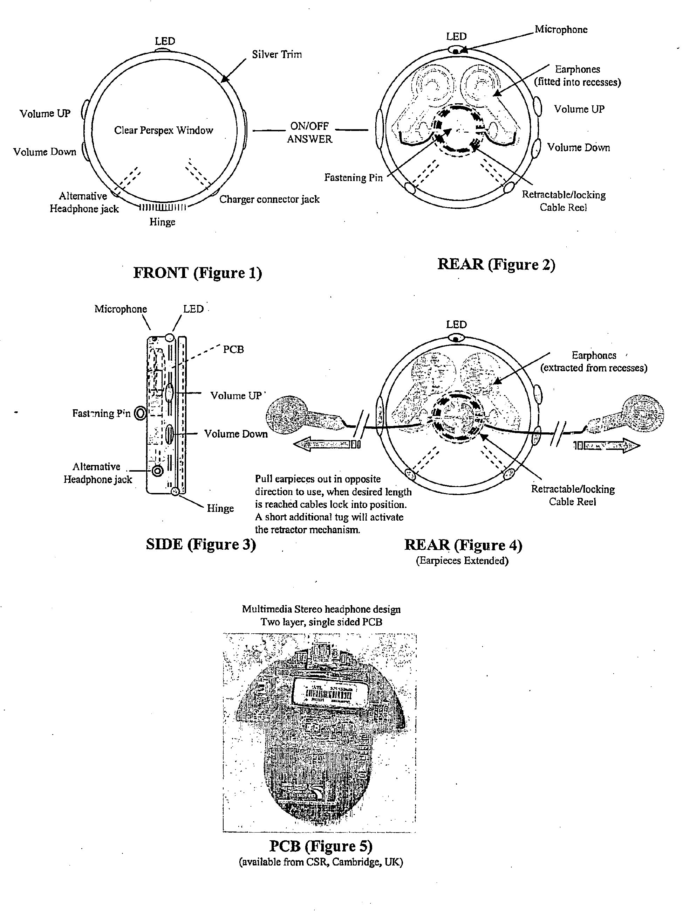

The Front (Figure 1) image shows a hinged clear window that can be used to display a photo, name details or logo of the user's choice. This window could also be removed and replaced with a similar disc showing corporate logo or design for branding purposes. The small amount of space behind the image or corporate branded disc could be used to store a folded note of currency or important health information about the user in case of an emergency. Also shown is the location of the volume up & down and the on/off answer buttons, these enable the user to easily adjust the volume and answer/terminate a telephone or video call. Towards the bottom of the badge, there are two jack plug sockets, one for the charger and one for an alternative headphone set (if required). An LED indicator is located at the top so that it can be clearly viewed by the user; this LED will show when the headset is on/off, in standby or active.

The Rear image (Figure 2) shows how the earphones are fitted into recesses of the housing for neat storage and easy access. These headphones are connected to a retractable/locking cable reel that enable the earphones to be extended for use and then retracted back into the badge when no longer required. When the user stops pulling the earpieces out they are locked into position. An additional light tug will activate the retractable mechanism and the wires will be recoiled back into the badge. The earpieces can then be pushed back into the recesses of the badge for storage. The fastening pin can also be seen with it's supports located either side of the retractable cable reel in the centre of the badge. There is also a microphone built into the badge that is located near to the LED on the top of the housing, this ensures a good level of audio pick up without the need for a separate extendable microphone.

The Side (Figure 3) image helps to show the relative position of the LED and microphone on the top of the housing as well as the position of the volume up and down buttons. The side image (3) also shows that with the earphones pushed back into their recesses, the rear of the badge is flat with only the fastening pin standing out from the body of the badge. This image also helps to show the hinged front window in relation to the main body of the badge. One of the two jack plug sockets can also be seen, (the Alternative headphone jack) with the charger socket located in the same position on the other side (out of sight) of this image.

The Rear (Figure 4) image shows how the earphones are removed from their recesses and extended away from the badge in opposite directions with the wires extending from the retractable cable reel as the earpieces are pulled. The internal reel turning to release extra wire in both directions. With the wires being pulled out simultaneously there is a balancing of forces to reduce any strain on the garment to which the badge is fastened (a clip could also be used as an alternative method of fastening).
The PCB (Figure 5) image shows an example of a PCB that can be incorporated into the Badge housing to provide the required Bluetooth (R.T.M) functionality.

## Claims

1. A Wireless Stereo Badge with a built in microphone and two retractable earpieces each connected to a retractable/locking cable reel that enables each earpiece to be simultaneously pulled in opposite directions balancing the load on the garment that the badge is to be fastened to earpiece cables lock once the pulling action is ceased at a required length of cable to enable each earpiece to be fitted into one ear wherein the earpiece cables will automatically be retracted when they receive an additional pull and once retracted will enable the earpieces to be neatly stored in recesses at the rear of the badge.

2. A Wireless Stereo Badge as claimed in Claim 1 where the device includes a clear window that enables a user to insert a picture or other image of their choice.

3. A Wireless Stereo Badge as claimed in Claim 1 that has a user accessible compartment that can be used to store emergency health information and or a folded note of currency.

4. A Wireless Stereo Badge as claimed in Claim 1 that has a removable clear window that can be replaced with a corporate branded disc with similar dimensions.

## Patentansprüche

1. Ein Kabelloser Stereoanstecker mit eingebautem Mikrofon und zwei ausziehbaren Ohrmuscheln, die jeweils mit einer ausziehbaren/einrastenden Kabelrolle verbunden sind, durch die jede Ohrmuschel jeweils gleichzeitig in entgegengesetzter Richtung gezogen werden kann, wobei die Last auf die Kleidung, an der der Anstecker angebracht ist, ausbalanciert wird: bei dem die Kabel der Ohrmuscheln einrasten, sobald der Ziehvorgang auf der für das Befestigen jeder Ohrmuschel im Ohr erforderlichen Länge abbricht: bei dem die Kabel der Ohrmuscheln automatisch herausgezogen werden, wenn sie zusätzlichen Zug erhalten und **dadurch**, einmal herausgezogen, die ordentliche Aufbewahrung der Ohrmuscheln in den Vertiefungen auf der Rückseite des Ansteckers ermöglicht wird.

2. Ein wie in Anpruch 1 beanspruchter Kabelloser Stereoanstecker, bei dem das Gerät ein klares Fenster, das dem Benutzer das Einfügen eines Fotos oder eines anderen Bilds seiner Wahl ermöglicht, miteinschließt.

3. Ein wie in Anspruch 1 beanspruchter Kabelloser Stereoanstecker, der über ein dem Benutzer zugängliches Fach verfügt, in dem Informationen zur Gesundheit für den Notfall und/oder eine Faltnotiz zur Währung aufbewahrt werden können

4. Ein wie in Anspruch 1 beanspruchter Kabelloser Stereoanstecker, der über ein abnehmbares klares Fenster verfügt, das durch eine Firmenkennzeichnung mit vergleichbaren Maßen ersetzt werden kann.

## Revendications

1. Un Badge Radio Stéréo comprenant un microphone intégré et deux écouteurs rétractables dont chacun est lié à une bobine de câble rétractable/de verrouillage qui permet de déployer simultanément chaque écouteur dans des directions opposées ; cela équilibre les forces qui s'exercent sur le vêtement sur lequel le badge est accroché vers l'endroit où les câbles se bloquent lorsque la traction cesse à une longueur nécessaire permettant de placer chaque écouteur dans une oreille. Une fraction supplémentaire permet au câble de se rétracter automatiquement, ce qui permet de ranger correctement les écouteurs dans les logements prévus à cet effet à l'arrière du badge.

2. Un Badge Radio Stéréo comme celui présenté tel que exposé au niveau de la Demande 1 est un dispositif comportant une fenêtre translucide qui permet à l'utilisateur d'insérer une photo ou une autre image de son choix.

3. Un Badge Radio Stéréo comme celui décrit à la Demande 1 comportant un compartiment qui peut contenir des informations sanitaires d'urgence et ou un billet de banque plié.

4. Un Badge Radio Stéréo comme celui présenté à la Demande 1 comportant une fenêtre translucide démontable qui peut être remplacée par un disque pourtant une marque de commerce avec les mêmes dimensions.
